# EUROPEAN PATENT SPECIFICATION

(11) **EP 0 419 263 B1**
(45) Date of publication and mention of the grant of the patent: **29.12.1993**
(21) Application number: 90310309.1
(22) Date of filing: 20.09.1990
(51) Int. Cl.: F16D 65/12

(54) **Improvements relating to wheels incorporating braking discs**
Räder mit Bremsscheiben
Roues incorporant des disques de freinage

(30) Priority: 22.09.1989 GB 8921410
(43) Date of publication of application: 27.03.1991
(73) Proprietor: SAB WABCO Holdings B.V., NL-1700 AC Heerhugowaard (NL)
(72) Inventor: Adamson, John, Heswall, Wirral, L60 6RG (GB); Watson, John Campbell, Ness, Wirral, L64 4BB (GB)
(74) Representative: Stringer, David Hiram

(56) References cited:
- EP-A- 0 159 639
- DE-B- 1 214 265
- DE-B- 1 258 444
- GB-A- 2 132 290
- US-A- 3 426 871
- US-A- 4 177 883

## Description

The present invention relates to a wheel incorporating a braking disc.

In particular the present invention relates to a wheel, primarily for use on railway vehicles, comprising a central hub and an outer rim interconnected by a web, a braking disc being mounted on each side of the wheel. Each braking disc can either comprise an integral annulus which is secured to the web of the wheel, or be comprised of at least two arcuate segments, each of which segments is secured to the web.

Certain known wheels of the above described construction, primarily for use on railway freight vehicles, have annular or segmented braking discs which are merely bolted to the web of the wheel, the bolts each passing first through an aperture in one braking disc and then, with clearance, through an aperture in the web, the bolts engaging in complementarily threaded bores in the other braking disc or passing through an aperture in the other braking disc and being engaged with a complementarily threaded nut. The braking discs thus sandwich the web of the wheel and expansion of the braking discs due to the heat generated under braking, is allowed for by the bolts being able to move in the bores in the web. However, whilst the braking discs are mounted concentrically about the wheel hub during manufacture, continued brake operation and the resultant expansion and contraction can and does adjust the position of the braking discs relative to the hub and rim, i.e. the bolts change position in the said aperture. This causes an imbalance which puts stress on other components and may reduce the life of the construction. This problem is clearly more critical on high speed railway systems where the imbalance forces are greater due to the higher speeds attained.

A further problem with the above freight vehicle wheel results from the fact that one bolt may become engaged with an aperture in the wheel so that this one bolt is under load. This can lead to the bolt being subjected to a high shear load which may result in the failure of the bolt.

Additionally one braking disc may move relative to the other as a result of differential expansion and contraction resulting in bending moments being applied to the bolts, which bending moments may cause bolt failure

To counter the above problems, especially in higher speed railway vehicles, a fitted bolt arrangement is provided wherein two cylindrical dowels, each having an axially extending through bore, are located with a small clearance in aligned apertures in the braking discs and web of the wheel. The dowels each have a radially enlarged end flange at one axial end and a bolt passes through the aligned dowels, a nut engaging the threaded end of the bolt to secure the dowels, braking discs and web together. Provision of these dowel/bolt arrangements allows for positive positioning of the braking discs at all times. Further, this construction is expensive to manufacture as it is necessary to produce accurately the aligned apertures in the braking discs and web. This, in practice, means that the apertures have to be drilled in one operation with the braking discs held in position on the web. Then the parts have to be separated with the cut edges being then cleaned and chamfered. The parts are then reassembled with the dowels and bolts. This is clearly a time-consuming and expensive operation.

A further proposal disclosed in DE-B-1214265, provides for a number of circumferentially spaced apart bolt arrangements which extend through apertures in a wheel web and through holes in annular braking discs located on each side of the wheel web. The apertures in the wheel web are rectangular and the part of the bolts passing therethrough is also rectangular, the bolts being a close fit in the apertures circumferentially of the wheel web but having an amount of clearance radially of the wheel web. This radial clearance allows for radial expansion of the braking discs due to the heat generated under braking, but the circumferential close fit prevents circumferential expansion of the non uniform type. In a cool condition the rectangular bolt parts engage the radially inner edge of the said rectangular apertures, thus centring the annular braking discs on the wheel web. A similar construction is disclosed in EP-A- 0159639, the sole difference being that the radially inner edge of each of the said apertures in the wheel web is curved and has a curvature which is complementary to the radially inner section of the bolt.

The aim of the present invention is to provide a wheel whereon the braking discs can be relatively cheaply mounted, whilst allowing for heat expansion and preferably also countering any repositioning of the braking discs, which might cause imbalance.

According to the present invention there is provided a wheel comprising a central hub and an outer rim interconnected by a web, a pair of annular braking discs being mounted one on each side of the web, each annular braking disc being secured to the web by at least two bolt arrangements, each bolt arrangement passing as a close fit through aligned apertures on the braking discs and with clearance through an aperture in the web, the bolt arrangement being offset radially inwardly of the wheel with respect to the centre of the aperture in the web, so as to engage against the radially inner section of each web aperture, taken with respect to the wheel, characterised in that the radially inner section of each web aperture is curved and the part of each bolt arrangement which engages the radially inner section of a web aperture is cylindrical, the radius of curvature of said cylindrical part being less than the radius of curvature of the radially inner section of the web aperture.

In a presently preferred embodiment of the present invention each braking disc is an annular member of unitary construction which is secured to the web by three equi-circumferentially spaced bolt arrangements. Each bolt arrangement comprises a single cylindrical dowel with a radially enlarged region at one axial end, the dowel passing as a close fit through aligned apertures in the two braking discs and with clearance through an aperture in the web. The radially enlarged end region of the dowel engages the region around the aperture in one braking disc and a washer through which a bolt extends, engages the region around the aligned aperture in the other braking disc. The bolt also passes through the axially extending bore in the dowel and mates with a complementarily threaded region of the bore. As a result of the dowel/bolt arrangements engaging against the radially inner section of each aperture, taken with respect to the wheel, the braking discs are accurately positioned with respect to the central hub, i.e. coaxially, and whilst the dowels may freely move in these apertures due to heat expansion, the braking discs will always return to the required coaxial position on cooling, thus preventing the imbalance which can occur in prior art clearance constructions.

A further advantage emanating from the above construction is that the braking discs will move together on expansion. This is ensured due to the relatively large dimensions of the dowels as compared to the bolts and the close fit of the dowels in the apertures in the braking discs. Thus the bolts merely clamp the parts together, in contrast to the prior art clearance constructions wherein the bolts alone held the braking discs in their relative positions, this latter fact sometimes resulting in the bolts bending and shearing.

Whilst the above preferred embodiment of the present invention utilises a single dowel in each bolt arrangement, a pair of coaxially aligned dowels held together by a nut and bolt may be substituted, the washer being replaced by an enlarged end region of the extra dowel. Such coaxially aligned dowels may merely interengage respective braking discs and be axially spaced apart from each other or one dowel may have a spigot which can engage in a recess in the other dowel to thus positively engage one coaxially aligned dowel with the other. Alternatively, the bolt arrangement may merely comprise a relatively large diameter bolt which is itself a close fit in the apertures in the braking discs, with a nut engaged therewith. Also, the apertures in the web may alternatively be elongate, radial slots.

Further, whilst the above preferred embodiment utilises three bolt arrangements, it is envisaged that two, diametrically opposed bolt arrangements could be used, and in the case of a braking disc comprised of two arcuate segments, each segment could be suitably secured to the web by two bolt arrangements in the manner of the present invention.

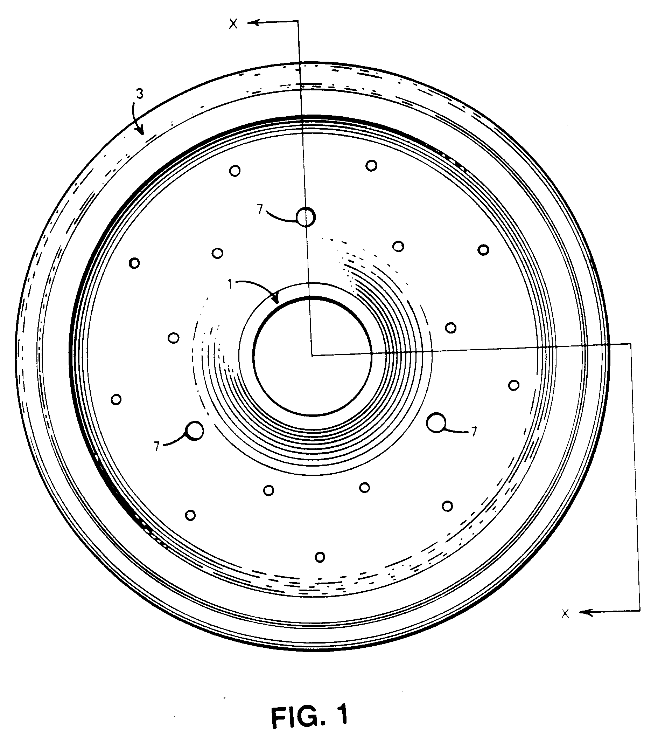

The present invention will now be further described, by way of example, with reference to the accompanying drawings, in which:-
Fig.1 is a front view of part of a preferred embodiment of wheel constructed according to the present invention;
Fig.2 is a cross-sectional view taken along line X-X in Fig.1;
Fig.3 is a cross-sectional view of a portion of a completely assembled wheel constructed according to the preferred embodiment of the present invention; and
Fig.4 is part of a cross-sectional view along line Y-Y in Fig.3.

The preferred embodiment of the present invention illustrated in the accompanying drawings comprises a central hub 1 and an outer rim 3, interconnected by a web 5. The web 5 has three equi-circumferentially spaced circular apertures 7. Alternatively elongate, radially extending, slots can be substituted for apertures 7.

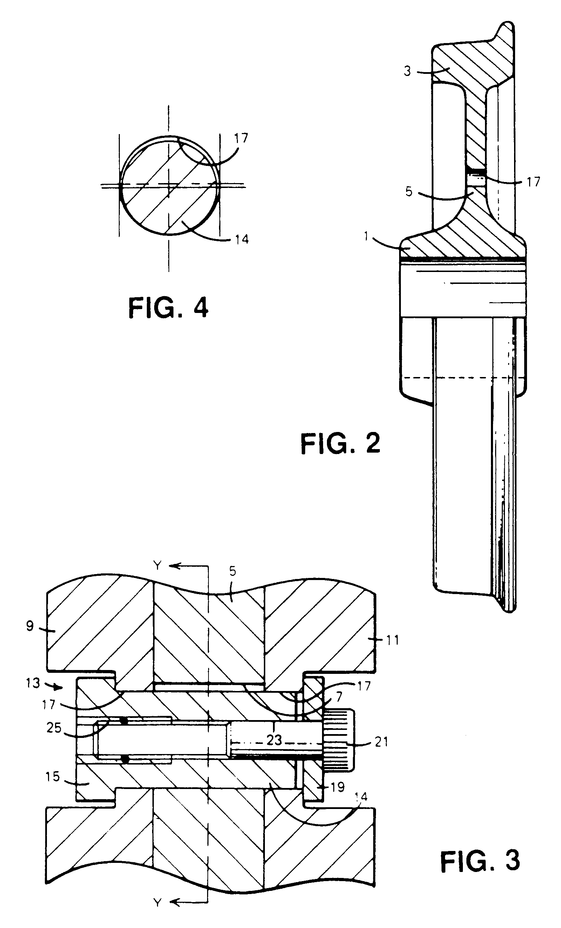

A pair of unitary construction annular braking discs 9,11 are secured one to each side of the web 5 by bolt arrangements 13 (see Figs. 3 and 4) which pass through the apertures 7 in the web 5. As best seen in Fig.3 each bolt arrangement 13 comprises a single cylindrical dowel 14 with a radially enlarged region 15 at one axial end. The dowel 14 extends as a close fit through an aperture 17 in one braking disc 9, with clearance through the aperture 7 in the web 5 (see Fig.4), and part way, as a close fit, through an aperture 17 in the other braking disc 11. The radius of curvature of the cylindrical dowel 14 is thus less than the radius of curvature of the radially inner section of the aperture 17. The enlarged end region 15 engages the braking disc 9 around the aperture 17 in said one braking disc 9, and a washer 19 through which a bolt 21 passes, engages the other braking disc 11 around the aperture 17. The bolt 21 extends through an axially extending bore 23 in the dowel 14 and engages a threaded region 25 of the bore 23. By tightening the bolt 21, the dowel 14 and washer 19 hold the respective braking discs 9,11 against opposite sides of the web 5.

The apertures 7 in the web 5 are radially arranged as compared to the aligned apertures 17 in the braking discs 9,11, so that when the wheel is initially assembled the dowels 14 each engage the radially inner curved edge region of the respective apertures 7. In this way the braking discs 9,11 are mounted accurately, coaxially with the hub 1 and rim 3. When the wheel is in use, expansion of the braking discs 9,11 due to the heat generated under braking causes the dowels 14 to move freely away from said radially inner edge region of the respective apertures 7, across the apertures 7. However, on cooling retraction of the braking discs 9,11 will cause at least one dowel 14 to initially engage the radially inner edge region of an aperture 7, resulting in the other dowels 14 also subsequently engaging the radially inner edge regions of the respective apertures 7. Thus the braking discs 9,11 attain their initial position with respect to the hub and rim, preventing any perpetuated imbalance being thus produced. Also, as the braking discs are positively supported on the web 5 by the relatively large diameter dowels 14, the narrower bolts 21 effectively only clamping the parts together, the bolts 21 are relieved of certain stresses which, in prior art constructions, caused possible deformation and shear of the bolts.

Further, whilst the above described embodiment utilises a single dowel 14, two like dowels could be aligned and engaged with the braking discs and web from opposite sides with a nut and bolt holding the dowels together. Whilst such like dowels can merely interengage respective braking discs and be axially spaced from each other, one dowel can be formed with a spigot which engages in a recess in the other to thus positively engage one coaxially aligned dowel with the other as well as with respective braking discs. Also, in the illustrated preferred embodiment, the bolt 21 can alternatively extend freely through the bore 23 and be engaged by a suitable nut.

As opposed to using a dowel or dowels and a bolt, a relatively large diameter bolt could be used by itself, the bolt itself being a close fit in the apertures 17 and being engaged by a suitable nut.

In the above described preferred embodiment of the present invention three equi-circumferentially spaced apertures 7 are provided in the web 5. However, alternatively, only two apertures, diametrically opposed with respect to each other, can be provided, with the apertures 17 in the braking discs being suitably positioned. In the case of annular braking discs comprised of two arcuate segments, four suitably positioned apertures 7 can be provided on the web 5, each segment being secured by two bolt arrangements of a desired construction.

The present invention thus provides a wheel for a high speed railway waggon, which is relatively cheap to manufacture and which takes account of heat expansion and imbalance problems, whilst also providing for a rigid long-life construction.

## Claims

1. A wheel comprising a central hub (1) and an outer rim (3) interconnected by a web (5), a pair of annular braking discs (9,11) being mounted one on each side of the web (5), each annular braking disc (9,11) being secured to the web by at least two bolt arrangements (13), each bolt arrangement (13) passing as a close fit through aligned apertures (17) on the braking discs and with clearance through an aperture (7) in the web (5), the bolt arrangement (13) being offset radially inwardly of the wheel with respect to the centre of the aperture (7) in the web (5), so as to engage against the radially inner section of each web aperture (7), taken with respect to the wheel, characterised in that the radially inner section of each web aperture (7) is curved and the part (14) of each bolt arrangement which engages the radially inner section of a web aperture (17) is cylindrical, the radius of curvature of said cylindrical part (14) being less than the radius of curvature of the radially inner section of the web aperture (7).

2. A wheel as claimed in claim 1, wherein each web aperture (7) is circular.

3. A wheel as claimed in claim 1, wherein each web aperture (7) is an elongate slot which extends radially of the wheel.

4. A wheel as claimed in any one of claims 1 to 3, wherein each bolt arrangement (13) comprises a single cylindrical dowel (14) with a radially enlarged region (15) at one axial end, the dowel (14) passing as a close fit through aligned apertures (17) in the two braking discs (9,11) and with clearance through a web aperture (7), the radially enlarged end region (15) of the dowel (14) engaging the region around the aperture (17) in one braking disc (9) and an annular washer (19) through which a bolt (21) passes, engaging the region around the aligned aperture (17) in the other braking disc (11), the bolt (21) also passing through an axially extending bore (23) in the dowel (14) and mating with a complementarily threaded region (25) of the bore (23).

5. A wheel as claimed in any one of claims 1 to 3, wherein each bolt arrangement (13) comprises a single cylindrical dowel (14) with a radially enlarged region (15) at one axial end, the dowel (14) passing as a close fit through aligned apertures (17) in the two braking discs (9,11) and with clearance through a web aperture (7), the radially enlarged end region (15) of the dowel engaging the region around the aperture (17) in one braking disc (9) and an annular washer (19) through which a bolt (21) passes, engaging the region around the aligned aperture (17) in the other braking disc (11), the bolt (21) also passing through an axially extending bore (23) in the dowel (14) and threadedly engaging in a nut to clamp the braking discs (9,11) to the web (5).

6. A wheel as claimed in any one of claims 1 to 3, wherein each bolt arrangement (13) comprises a pair of like dowels (14) which each have a radially enlarged axial end region (15), the dowels (14) engaging as a close fit in respective aligned apertures (17) in the braking discs (9,11) and as a clearance fit in a web aperture (7), the enlarged axial end regions (15) of the dowels (14) engaging the regions around the respective aligned apertures (17) in the braking discs (9,11), and a bolt (21) passing through axially extending aligned bores (23) in the respective dowels (14) and threadedly engaging in a nut to clamp the braking discs (9,11) to the web (5).

7. A wheel as claimed in any one of claims 1 to 3, wherein each bolt arrangement (13) comprises a bolt which is a close fit in aligned apertures (17) in the braking discs (9,11) and a clearance fit in a web aperture (7), the bolt being threadedly engaged with a nut.

8. A wheel as claimed in any one of the preceding claims, wherein three circumferentially equi-spaced apart bolt arrangements (13) are used with annular discs (9,11) of unitary construction.

9. A wheel as claimed in any one of claims 1 to 7, wherein each annular braking disc (9,11) is comprised of two arcuate segments, each segment being secured to the web by two bolt arrangements (13).

## Patentansprüche

1. Rad mit einer Mittelnabe (1) und einem äußeren Radkranz (3), die durch eine Radscheibe (5) miteinander verbunden sind, zwei ringförmigen Bremsscheiben (9, 11) , die an je einer Seite der Radscheibe (5) angebracht sind, wobei jede ringförmige Bremsscheibe (9, 11) durch wenigstens zwei Bolzenanordnungen (13) an der Radscheibe befestigt ist, wobei jede Bolzenanordnung (13) spielfrei durch ausgerichtete Öffnungen (17) in den Bremsscheiben und mit Spiel durch eine Öffnung (7) in der Radscheibe (5) geht, wobei die Bolzenanordnung (13) in Bezug auf die Mitte der Öffnung (7) in der Radscheibe (5) radial zum Inneren des Rades versetzt ist, so daß sie an dem in Bezug auf das Rad radial inneren Teil jeder Öffnung (7) der Radscheibe anliegt, dadurch gekennzeichnet, daß der radial innere Teil jeder Öffnung (7) der Radscheibe gekrümmt ist und der Teil (14) jeder Bolzenanordnung, der an dem radial inneren Teil einer Öffnung (7) der Radscheibe anliegt, zylindrisch ist, wobei der Krümmungsradius des zylindrischen Teils (14) kleiner ist als der Krümmungsradius des radial inneren Teils der Öffnung (7) der Radscheibe.

2. Rad nach Anspruch 1, bei dem jede Öffnung (7) der Radscheibe rund ist.

3. Rad nach Anspruch 1, bei dem jede Öffnung (7) der Radscheibe ein länglicher Schlitz ist, der radial zum Rad verläuft.

4. Rad nach einem der Ansprüche 1 bis 3, bei dem jede Bolzenanordnung (13) einen einzelen zylindrischen Dübel (14) mit einem radial vergrößerten Bereich (15) an einem axialen Ende umfaßt, wobei der Dübel (14) ohne Spiel durch ausgerichtete Öffnungen (17) in den zwei Bremsscheiben (9,11) und mit Spiel durch eine Öffnung (7) der Radscheibe geht, wobei der radial vergrößerte Endbereich (15) des Dübels (14) an dem Bereich rings um die Öffnung (17) in einer Bremsscheibe (9) anliegt, und eine ringförmige Beilagscheibe (19), durch die eine Schraube (21) geht, an dem Bereich rings um die ausgerichtete Öffnung (17) in der anderen Bremsscheibe (11) anliegt, wobei die Schraube (21) auch durch eine axial verlaufende Bohrung (23) in dem Dübel (14) geht und sich mit einem komplementären Gewindebereich (25) der Bohrung (23) verbindet.

5. Rad nach einem der Ansprüche 1 bis 3, bei dem jede Bolzenanordnung (13) einen einzelen zylindrischen Dübel (14) mit einem radial vergrößerten Bereich (15) an einem axialen Ende umfaßt, wobei der Dübel (14) ohne Spiel durch ausgerichtete Öffnungen (17) in den zwei Bremsscheiben (9,11) und mit Spiel durch eine Öffnung (7) der Radscheibe geht, wobei der radial vergrößerte Endbereich (15) des Dübels in den Bereich um die Öffnung (17) in einer Bremsscheibe (9) eingreift, und eine ringförmige Beilagscheibe (19), durch die eine Schraube (21) geht, an dem Bereich rings um die ausgerichtete Öffnung (17) in der anderen Bremsscheibe (11) anliegt, wobei die Schraube (21) auch durch eine axial verlaufende Bohrung (23) in dem Dübel (14) geht und mit Gewinde in eine Mutter eingreift, um die Bremsscheiben (9,11) gegen die Radscheibe (5) zu spannen.

6. Rad nach einem der Ansprüche 1 bis 3, bei dem jede Bolzenanordnung (13) ein Paar gleicher Dübel (14) umfaßt, die jeweils einen radial vergrößerten axialen Endbereich (15) besitzen, wobei die Dübel (14) ohne Spiel in jeweilige ausgerichtete Öffnungen (17) in den Bremsscheiben (9,11) und mit Spiel in eine Öffnung (7) der Radscheibe eingreifen, wobei die vergrößerten axialen Endbereiche (15) der Dübel (14) an den Bereichen rings um die jeweiligen ausgerichteten Öffnungen (17) in den Bremsscheiben (9,11) anliegen, und eine Schraube (21), die durch axial verlaufende ausgerichtete Bohrungen (23) in den jeweiligen Dübeln (14) geht und mit Gewinde in eine Mutter eingreift, um die Bremsscheiben (9,11) gegen die Radscheibe (5) zu spannen.

7. Rad nach einem der Ansprüche 1 bis 3, bei dem jede Bolzenanordnung (13) einen Bolzen umfaßt, der einen Paßsitz in den ausgerichteten Öffnungen (17) in den Bremsscheiben (9,11) und eine Spielpassung in einer Öffnung (7) der Radscheibe bildet, wobei der Bolzen mit einer Mutter in Gewindeverbindung steht.

8. Rad nach einem der vorangehenden Ansprüche, bei dem drei Bolzenanordnungen (13) mit gleichen Umfangsabständen mit ringförmigen Scheiben (9,11) einteiliger Bauweise verwendet werden.

9. Rad nach einem der Ansprüche 1 bis 7, bei dem jede ringförmige Bremsscheibe (9,11) zwei bogenförmige Segmente aufweist, wobei jedes Segment durch zwei Bolzenanordnungen (13) an der Radscheibe befestigt ist.

## Revendications

1. Roue se composant d'un moyeu central (1) et d'une jante extérieure (3) reliés par une toile (5), deux disques annulaires de freinage (9, 11) étant montés, l'un de chaque côté de la toile (5), chaque disque annulaire de freinage (9, 11) étant fixé à la toile par au moins deux ensemble de boulonnage (13), chaque ensemble de boulonnage (13) passant à ajustement serré dans les trous alignés (17) des disques de freinage et avec jeu dans un trou (7) de la toile (5), l'ensemble de boulonnage (13) étant décalé radialement vers l'intérieur de la roue par rapport au centre du trou (7) de la toile (5) de manière à s'appliquer contre la partie radialement intérieure de chaque trou (7) de la toile, considérée par rapport à la roue, caractérisée en ce que la partie radialement intérieure de chaque trou (7) de la toile est courbe et la partie (14) de chaque ensemble de boulonnage qui s'applique contre la partie radialement intérieure d'un trou (17) de la toile est cylindrique, le rayon de courbure de ladite partie cylindrique (14) étant inférieur au rayon de courbure de la partie radialement intérieure du trou (7) de la toile.

2. Roue selon la revendication 1, dans laquelle chaque trou (7) de la toile est circulaire.

3. Roue selon la revendication 1, dans laquelle chaque trou (7) de la toile est une fente allongée qui est orientée suivant un rayon de la roue.

4. Roue selon l'une quelconque des revendications 1 à 3, dans laquelle chaque ensemble de boulonnage (13) se compose d'un unique goujon cylindrique (14) comportant à une extrémité axiale une partie radialement élargie (15), le goujon (14) passant à ajustement serré dans les trous alignés (17) des deux disques de freinage (9, 11) et avec jeu dans un trou (7) de la toile, la partie extrême (15) élargie radialement du goujon (14) s'appliquant contre la région située autour du trou (17) d'un disque de freinage (9) et une rondelle annulaire (19), par laquelle passe un boulon (21), s'appliquant contre la région située autour du trou aligné (17) de l'autre disque de freinage (11), le boulon (21) passant aussi dans un trou axial (23) du goujon (14) et se montant dans une partie (25) du trou (23) qui comporte un taraudage complémentaire.

5. Roue selon l'une quelconque des revendications 1 à 3, dans laquelle chaque ensemble de boulonnage (13) se compose d'un unique goujon cylindrique (14) qui comporte à une extrémité axiale une partie (15) élargie radialement, le goujon (14) passant à ajustement serré dans les trous alignés (17) des deux disques de freinage (9, 11) et avec jeu dans un trou (7) de la toile, la partie extrême, élargie radialement, (15) du goujon s'appliquant contre la région située autour du trou (17) d'un disque de freinage (9) et une rondelle annulaire (19), par laquelle passe un boulon (21), s'appliquant contre la région située autour du trou aligné (17) de l'autre disque de freinage (11), le boulon (21) passant aussi dans un trou axial (23) du goujon (14) et se montant par vissage dans un écrou pour le serrage des disques de freinage (9, 11) contre la toile (5).

6. Roue selon l'une quelconque des revendications 1 à 3, dans laquelle chaque ensemble de boulonnage (13) se compose de deux goujons analogues (14), dont chacun comporte une partie axialement extrême (15) qui est radialement élargie, les goujons (14) se montant à ajustement serré dans des trous alignés respectifs (17) des disques de freinage (9, 11) et avec jeu dans des trous (7) de la toile, les parties axialement extrêmes (15) des goujons (14) qui sont élargies s'appliquant contre les région situées autour des trous alignés respectifs (17) des disques de freinage (9, 11) et un boulon (21) passant par des trous alignés (23), orientés axialement, des goujons respectifs (14) et se montant dans un taraudage d'un écrou pour le serrage des disques de freinage (9, 11) contre la toile (5).

7. Roue selon l'une quelconque des revendications 1 à 3, dans laquelle chaque ensemble de boulonnage (13) se compose d'un boulon qui se monte à ajustement serré dans des trous alignés (17) des disques de freinage (9, 11) et avec jeu dans un trou (7) de la toile, les boulons se montant dans le taraudage d'un écrou.

8. Roue selon l'une quelconque des revendications précédentes, dans laquelle trois ensembles de boulonnage (13) équidistants à la circonférence sont utilisés avec des disques annulaires (9, 11) qui sont monobloc.

9. Roue selon l'une quelconque des revendications 1 à 7, dans laquelle chaque disque annulaire de freinage (9, 11) se compose de deux segments courbes, chaque segment étant fixé sur la toile par deux ensembles de boulonnage (13).
